# EUROPÄISCHE PATENTANMELDUNG

(11) **EP 2 003 376 A1**
(43) Veröffentlichungstag der Anmeldung: **17.12.2008**
(21) Anmeldenummer: 08010507.5
(22) Anmeldetag: 10.06.2008
(51) Int. Cl.: F16J 15/32

(54) **Dichtungselement für eine Welle**

(30) Priorität: 15.06.2007 DE 102007028396
(71) Anmelder: Dichtungstechnik G. Bruss GmbH & Co. KG, 22955 Hoisdorf (DE)
(72) Erfinder: Vom Schemm, Michael, 22955 Hoisdorf (DE)
(74) Vertreter: Müller Verweyen

(57) **Zusammenfassung**

Ein Dichtungselement (12) für eine Welle (16), insbesondere Kurbelwelle eines Verbrennungsmotors, umfasst eine Dichtlippe (14) aus einem polymeren Material, die im Betrieb trichterförmig zu dem abzudichtenden Raum (17) hin über die Welle (16) gestülpt ist und in dem auf der Welle (16) aufliegenden Abschnitt (15) eine Rückförderstruktur (19) zum Rückfördern von austretendem Medium zu dem abgedichteten Raum (17) sowie auf der Innenseite mindestens eine im Wesentlichen axial-radial verlaufende Struktur (21; 23; 24) aufweist, die bei zur Umgebungsseite (18) umgestülpter Dichtlippe (14) zur Bildung mindestens eines Leckagekanals führt. Die Struktur umfasst mindestens ein gegenüber der innenseitigen Oberfläche (22) der Dichtlippe (14) erhabenes Element (21; 24).

## Beschreibung

Die Erfindung betrifft ein Dichtungselement für eine Welle, insbesondere Kurbelwelle eines Kraftfahrzeugs, nach dem Oberbegriff von Anspruch 1.

Ein Dichtungselement mit einer elastomeren Dichtlippe ist aus DE 100 33 446 C2 bekannt. Die Dichtlippe ist im Betrieb trichterförmig zu dem abzudichtenden Raum hin über die Welle gestülpt. Bei der Montage besteht jedoch eine gewisse Gefahr, dass die Dichtlippe fehlerhaft zu der Umgebungsseite hin umgestülpt wird. Im ungünstigsten Fall kann dieser Fehler bei der statischen Dichtheitsprüfung des Motors nicht erkannt werden, wenn die Innenseite der Dichtlippe rundum satt auf der Welle aufliegt. Im Betrieb des Motors wird dann die fehlerhaft umgestülpte Dichtlippe undicht, weil die Innenseite der Dichtlippe üblicherweise nicht als dynamische Dichtung ausgelegt ist.

Aus der DE 38 30 711 Al ist es für einen aufgrund der verwendeten Ringfeder zum Anpressen der Dichtlippe an die Welle nicht gattungsgemäßen Radialwellendichtring bekannt, auf der wellenabgewandten Seite der Dichtlippe eine in Unfangsrichtung verlaufende wellenförmige Profilierung oder Reihe von noppenförmigen Erhebungen vorzusehen, um eine gezielten Undichtigkeit bei der Druckluftprüfung im Fall einer unsachgemäß umgestülpten Dichtlippe zu schaffen. Bei einem gattungsgemäßen Dichtungselement ohne Ringfeder wäre aufgrund der erheblich größeren axialen Länge des Dichtabschnitts eine solche in Unfangsrichtung verlaufende wellenförmige Profilierung oder Noppenreihe nicht geeignet, um eine Leckage bei fehlerhaft umgestülpter Dichtlippe zu erzeugen.

EP 1 116 905 B1 offenbart ein Dichtungselement nach dem Oberbegriff von Anspruch 1 mit axial-radial verlaufenden Nuten zur Bildung eines Leckagekanals. An den Stellen, an denen die Nuten eingearbeitet sind, wird die radiale Anpressung der Dichtlippe geschwächt und unter Umständen die für die Dichtfunktion erforderliche Mindestanpressung unterschritten.

Die Aufgabe der Erfindung besteht darin, ein Dichtungselement bereitzustellen, das mit einfachen Mitteln die zuverlässige Erkennung einer fehlerhaft umgestülpten Dichtlippe ermöglicht, ohne dass dadurch die Dichtfunktion beeinträchtigt wird.

Die Erfindung löst diese Aufgabe mit den Mitteln von Anspruch 1. Aufgrund der erfindungsgemäßen Struktur auf der Innenseite der Dichtlippe, die ein gegenüber der innenseitigen Oberfläche erhabenes Element umfasst, wird bei zur Umgebungsseite ganz oder teilweise umgestülpter Dichtlippe ein rundherum sattes Aufliegen der Dichtlippe auf der welle verhindert und somit mindestens ein Leckagekanal gebildet, der bei der Druckprüfung zur Anzeige einer fehlerhaften Undichtigkeit führt. Das gegenüber der innenseitigen Oberfläche erhabene Element führt nicht zu einer Schwächung der Dichtlippe und daher nicht zu einer Beeinträchtigung der Dichtfunktion.

Erfindungsgemäß von besonderer Bedeutung ist der axial-radiale verlauf der Struktur, der - im Gegensatz zu einer in Umfangsrichtung verlaufenden Struktur - bei einer erfindungsgemäßen Dichtlippe ohne Ringfeder erst die Bildung eines Leckagekanals über die gesamte axiale Länge des Kontaktabschnitts zwischen Dichtlippe und Welle ermöglicht. Die axial-radiale Struktur ist wesentlich einfacher herstellbar als bekannte gewindeförmig verlaufende Strukturen auf der Innenseite der Dichtlippe. Axial und radial bezieht sich auf die Längsachse der Welle. Axial-radial bedeutet in einer Ebene, die die Längsachse der welle enthält.

Die Erfindung ist insbesondere anwendbar auf Dichtlippen basierend auf elastomerem Material, insbesondere Gummi, einschließlich thermoplastischem Elastomer, umfasst jedoch ebenfalls auf PTFE basierende Dichtlippen.

Die Erfindung wird im Folgenden anhand vorteilhafter Ausführungsformen unter Bezugnahme auf die beigefügten Figuren erläutert. Dabei zeigt:
- Fig. 1:: einen Querschnitt durch einen Radialwellendichtring im Betriebszustand;
- Fig. 2:: eine perspektivische Ansicht des Radialwellendichtrings aus Fig. 1;
- Fig. 3:: einen Querschnitt durch den Radialwellendichtring aus Fig. 1 im umgestülpten Zustand; und
- Fig. 4:: eine perspektivische Ansicht eines Radialwellendichtrings in einer alternativen Ausführungsform.

Der Radialwellendichtring 10 umfasst ein abgewinkeltes Halteteil 11 mit einem radialen Abschnitt 13, an dem ein Dichtungselement 12 verliersicher angebunden ist. Das Halteteil 11 kann insbesondere Teil eines Dichtflansches zur Verbindung mit einem Gehäusebauteil des Motors bzw. Motorgetriebes, oder ein solches Gehäusebauteil selbst sein.

Das Halteteil 11 besteht vorzugsweise aus Metall, insbesondere Stahlblech, oder einem geeigneten Kunststoff. Das Dichtungselement 12 besteht vorzugsweise aus einem Elastomer, insbesondere Gummi.

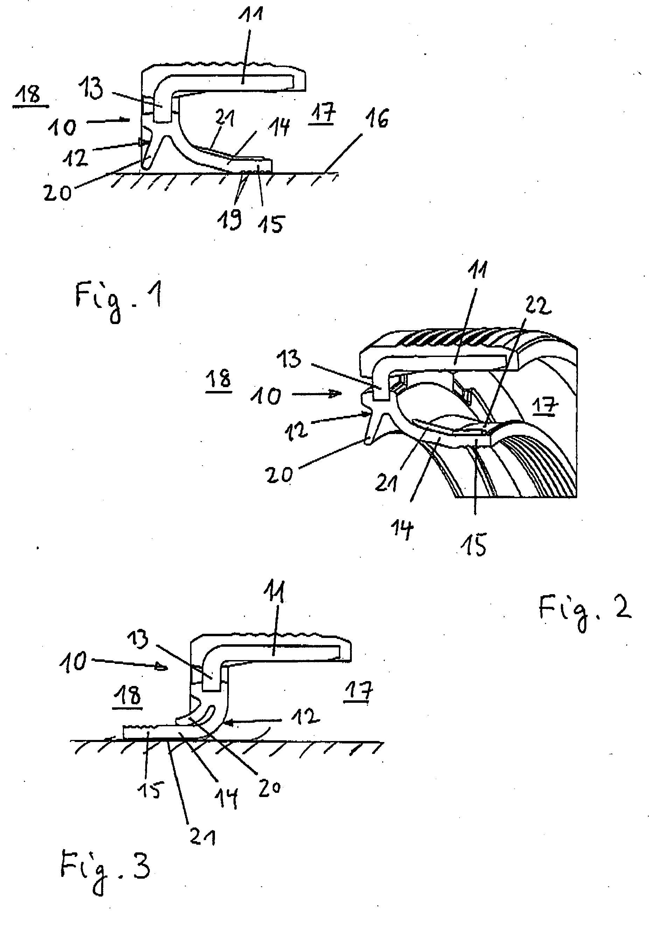

Das Dichtungselement 12 umfasst eine Dichtlippe 14, die in dem in Fig. 1 gezeigten Betriebszustand mit einem Dichtabschnitt 15 über eine gewisse axiale Länge auf der Kurbelwelle 16 aufliegt, um den Innenraum 17 gegen die Umgebungsseite 18 abzudichten. Der Dichtabschnitt 15 weist gewindeförmige Rückförderkanäle 19 auf, um aus dem Innenraum 17 zwischen den Dichtabschnitt 15 und die Welle 16 geratendes Medium in den Innenraum 17 zurückzufördern. Das Dichtungselement 12 kann weiterhin eine umgebungsseitige Schutzlippe 20 aufweisen, um das Eindringen von Schmutz von der Umgebungsseite 18 zwischen den Dichtabschnitt 15 und die Welle 16 zu verhindern.

Auf der von der Welle 16 abgewandten Innenseite der Dichtlippe 14 ist in dem Ausführungsbeispiel nach den Fig. 1 bis 3 mindestens eine axial-radial verlaufende Rippe 21 erkennbar, die über die restliche Oberfläche 22 der Innenseite der Dichtlippe 14 erhaben und vorzugsweise einstückig mit der Dichtlippe 14 gebildet ist. Im Falle einer fehlerhaft zur Umgebungsseite 18 umgestülpten Dichtlippe 14, wie in Fig. 3 gezeigt, verhindert die auf der Welle 16 aufliegende Rippe 21 ein rundum sattes Aufliegen der Dichtlippe 14 auf der Welle 16. Seitlich neben der Rippe 21 bilden sich axial-radial erstreckende Leckagekanäle, die eine Erkennung des fehlerhaften Montagezustands gemäß Fig. 3 bei der anschließenden statischen Druckprüfung erlauben. Die axial-radiale Erstreckung der Rippe 21 bzw. allgemeiner der Leckagekanäle erzeugenden Struktur ist vorzugsweise mindestens so groß wie die axiale Länge des Dichtabschnitts 15.

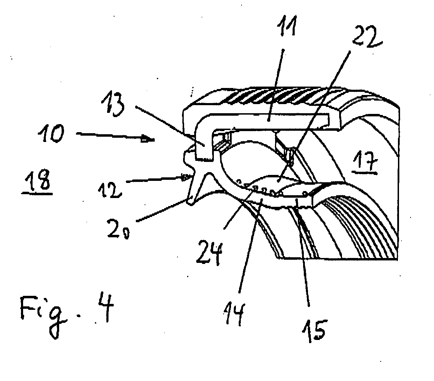

In der alternativen Ausführungsform gemäß Figur 4 ist als Leckagekanäle erzeugende Struktur mindestens eine axial-radiale Reihe von erhabenen Noppen 24 auf der Innenseite der Dichtlippe 14 vorzugsweise einstückig mit dieser gebildet.

Grundsätzlich reicht eine Leckagekanäle erzeugende Struktur 21, 23, 24 am Umfang der Dichtlippe 14 aus. Die Dichtlippe 14 kann auch eine Mehrzahl von vorzugsweise gleichmäßig über den Umfang verteilten Leckagekanäle erzeugenden Strukturen 21, 23, 24 aufweisen. Auch eine Kombination verschiedenartiger Leckagekanäle erzeugender Strukturen, beispielsweise von Stegen 21 und Noppenreihen 24, ist denkbar.

## Patentansprüche

1. Dichtungselement (12) für eine Welle, (16), insbesondere Kurbelwelle eines verbrennungsmotors, mit einer Dichtlippe (14) aus einem polymeren Material, die im Betrieb trichterförmig zu dem abzudichtenden Raum (17) hin über die Welle (16) gestülpt ist und in dem auf der Welle (16) aufliegenden Abschnitt (15) eine Rückförderstruktur (19) zum Rückfördern von austretendem Medium zu dem abgedichteten Raum (17) sowie auf der Innenseite mindestens eine im Wesentlichen axial-radial verlaufende Struktur (21; 23; 24) aufweist, die bei zur Umgebungsseite (18) umgestülpter Dichtlippe (14) zur Bildung mindestens eines Leckagekanals führt, **dadurch gekennzeichnet, dass** die Struktur mindestens ein gegenüber der innenseitigen Oberfläche (22) der Dichtlippe (14) erhabenes Element (21; 24) umfasst.

2. Dichtungselement nach Anspruch 1, wobei die Dichtlippe (14) aus einem elastomeren Werkstoff besteht.

3. Dichtungselement nach Anspruch 1 oder 2, wobei das Element (21; 24) einstückig mit der Dichtlippe (14) gebildet ist.

4. Dichtungselement nach einem der vorangehenden Ansprüche, wobei das Element eine im Wesentlichen axial-radial verlaufende Rippe (21) ist.

5. Dichtungselement nach einem der vorangehenden Ansprüche, wobei das Element eine im Wesentlichen axial-radial verlaufende Reihe von Noppen (24) ist.

6. Bauteil für einen Verbrennungsmotor, insbesondere Gehäuseteil oder Dichtflansch, mit einem integrierten Dichtungselement (12) nach einem der vorangehenden Ansprüche.
